Europäisches Patentamt

European Patent Office

Office européen des brevets

(19)

(11) EP 0 997 728 A2

(12) EUROPÄISCHE PATENTANMELDUNG

(43) Veröffentlichungstag:
03.05.2000 Patentblatt 2000/18

(51) Int Cl.⁷: **G01N 21/64**

(21) Anmeldenummer: 99121257.2

(22) Anmeldetag: 25.10.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.10.1998  DE 19849585**

(71) Anmelder: **FRAUNHOFER-GESELLSCHAFT ZUR FÖRDERUNG DER ANGEWANDTEN FORSCHUNG E.V.**
**80636 München (DE)**

(72) Erfinder:
• **Langer, Peter, Dipl.-Ing.**
  **80992 München (DE)**
• **Müller, Rudolf, Prof.**
  **82319 Starnberg (DE)**

(74) Vertreter: **Schoppe, Fritz, Dipl.-Ing.**
**Schoppe, Zimmermann & Stöckeler,**
**Patentanwälte,**
**Postfach 71 08 67**
**81458 München (DE)**

(54) **Vorrichtung und Verfahren zur Bestimmung der Fluoreszenz einer Probe**

(57)    Eine erfindungsgemäße Vorrichtung zur Bestimmung einer Fluoreszenz einer Probe umfaßt eine Anregungslichtquelle zum Erzeugen eines Anregungslichts, das eine Wellenlänge aufweist, die geeignet ist, um in der Probe Fluoreszenzlicht zu erzeugen, wobei das Anregungslicht durch ein Modulationssignal mit einer Modulationsfrequenz moduliert ist, einen optischen Empfänger, der angeordnet ist, um ein elektrisches Meßsignal zu erzeugen, das einen Fluoreszenzanteil und einen Anregungsanteil aufweist, wobei die Frequenz des Meßsignals der Modulationsfrequenz entspricht, und eine elektronische Signalverarbeitungseinrichtung zum Verarbeiten des Meßsignals, indem das

Meßsignal mit einem Referenzsignal, dessen Phasenbeziehung zu dem Modulationssignal bekannt ist, kombiniert wird, derart, daß der Anregungsanteil unterdrückt wird. Durch Verlegen der Anregungslichtkompensation auf die elektronische Seite der Vorrichtung kann die Vorrichtung auf eine maximale Sammlung des Fluoreszenzlichts ausgelegt werden. Zusätzlich kann Fremdlicht durch frequenzselektives Verstärken des Meßsignals einfach unterdrückt werden. Durch elektronische Kompensation optischer Einflüsse können weniger aufwendige optische Abschirmungen verwendet werden, um sowohl Preis als auch Größe solcher Vorrichtungen zu reduzieren.

Fig. 1

**Beschreibung**

Die vorliegende Erfindung bezieht sich auf Vorrichtungen und Verfahren zur Bestimmung einer Fluoreszenz einer Probe und insbesondere auf Fluoreszenzmeßsysteme, bei denen optische Störeinflüsse reduziert sind.

Fluoreszenzmessungen spielen heutzutage eine wesentliche Rolle in der chemischen und biochemischen Analytik. Dabei werden die Moleküle einer Probe durch Bestrahlung mit Licht einer bestimmten Wellenlänge in einen angeregten Zustand versetzt. Die Rückkehr der Moleküle in den Grundzustand erfolgt durch Abstrahlung von längerwelligem Fluoreszenzlicht. Informationen über die zu bestimmende Probe, d. h. Fluoreszenzdaten, werden durch Messung der Intensität, der Polarisation oder Abklingzeit des Fluoreszenzlichts erhalten. Auf Fluoreszenz basierende Verfahren werden im Labor, zur Analyse und in der Umweltanalytik eingesetzt.

Bei Fluoreszenzmessungen wird das Licht einer Anregungslichtquelle auf einen in Lösung befindlichen oder immobilisierten Farbstoff eingestrahlt, der mit einer gewissen Zeitverzögerung mit der dominierenden Zeitkonstante τ, die auch als "Lebensdauer", "Life Time" oder "Decay Time" bezeichnet wird, Fluoreszenzlicht abstrahlt, dessen Wellenlänge größer als die Wellenlänge des Anregungslichts ist. Dieses Fluoreszenzlicht enthält Informationen über den Analyten in Form von Intensität, Zeitkonstante und weiteren optischen Größen, wie z. B. der Polarisation und der Wellenlänge. Die Zeitkonstante τ kann entweder als Abklingkonstante des Fluoreszenzlichts bei pulsförmiger Anregung, d. h. im Zeitbereich, oder als Phasenverschiebung bei z. B. sinusförmiger Modulation, d. h. im Frequenzbereich, gemessen werden.

Die Messung der Zeitkonstante im Zeitbereich oder im Frequenzbereich ist bekannt und in dem Fachbuch "Optische Spektroskopie" von W. Schmidt, erschienen im VCH-Verlag, 1994, beschrieben.

Unabhängig vom angewandten Meßverfahren ist das Verhältnis von Fluoreszenzlicht zu Anregungslicht sehr klein, weshalb im Stand der Technik zwei Maßnahmen vorgesehen sind, um dieses Verhältnis zu vergrößern.

Die erste bekannte Maßnahme besteht im Einbau eines optischen Filters zwischen dem Fluoreszenz-Farbstoff und dem optischen Detektor. Damit wird das Anregungslicht vor dem optischen Detektor ausgeblendet. Oftmals wird auch das Anregungslicht noch gefiltert. Durch solche optischen Filtermaßnahmen läßt sich eine Trennung in der Größenordnung von 1 : 1000 erreichen.

Die zweite bekannte Maßnahme besteht darin, daß die Anregungslichtquelle und der Photodetektor derart angeordnet werden, daß zwischen denselben keine "Sichtverbindung" besteht. Typischerweise wird dies durch eine um 90° versetzte Anordnung von Sender und Empfänger erreicht. Damit kann je nach Streuung des Meßmediums eine Trennung von bis zu 1 : 100 erreicht werden. Nachteilig daran ist aber die Tatsache, daß nur ein kleiner Teil des Fluoreszenzlichts, der in der Größenordnung von 5 % liegt, zum Empfänger gelangt.

Zu den genannten beiden Maßnahmen können Zwischenbilder durch Linsen erzeugt und mit Blenden gefiltert werden, um Fremd- und Streulicht am Empfänger abzuschwächen.

Bekannte Geräte, die eine Messung im Zeit- oder Frequenzbereich durchführen, sind bisher nur als Großgeräte erhältlich. Als Lichtquelle wird in solchen Geräten entweder ein Laser oder eine Lampe, wie z. B. eine Xenon-Lampe, mit Monochromator verwendet. Die notwendige Modulation des Lichts wird üblicherweise durch elektrooptische Modulatoren bewirkt. Die benötigten Modulationsfrequenzen liegen für Frequenzbereichsmessungen zwischen einem Kilohertz und einigen hundert Megahertz. Bezogen auf die Abklingzeitkonstante τ können Modulationsfrequenzen im Bereich 0,1/τ bis 10/τ vorteilhaft eingesetzt werden.

Bei der Miniaturisierung und Automatisierung der Meßverfahren, welche Voraussetzung für den Einsatz derselben in der Prozeßmeßtechnik sind, stellt ferner die Einstrahlung von Fremdlicht ein wesentliches Problem dar. Dieses wird bisher durch aufwendige Gehäuse abgeschirmt, die üblicherweise schwer, sperrig und teuer sind.

Die DD 229 220 A1 offenbart eine Photodetektoranordnung für die Spektroskopie. Ein modensynchronisierter Laser wird im Pulsbetrieb verwendet, um in einer Probe pulsartige Fluoreszenzen zu erzeugen. Anschließend wird von jeder Fluoreszenz die Abfallzeit gemessen. Es liegt somit ein Verfahren zur Messung der Fluoreszenzlebensdauer im Zeitbereich vor. Das empfangene Fluoreszenzlicht wird mit dem Anregungslicht, das elektronisch verzögert wird, so kombiniert, daß eine Komponente des Empfangslichts vollständig unterdrückt werden kann. Durch Einstellen der Verzögerungszeit kann erreicht werden, daß das gesamte Fluoreszenzlicht mit einer bestimmten Fluoreszenzlebensdauer unterdrückt wird bzw. daß das Fluoreszenzlicht mit einer sehr kurzen Fluoreszenzlebensdauer, das das gestreute Anregungslicht sein kann, unterdrückt wird.

Das US-Patent Nr. 5,196,709 bezieht sich auf ein Fluoreszenzmeßverfahren. Ein Halbleiterlaser erzeugt Lichtpulse mit einer Dauer im ps-Bereich mit einer Wiederholrate von 10 MHz. Damit werden in einer Probe pulsartige Fluoreszenzen erzeugt. Das elektrische Signal eines Empfangs-Photodetektors hat aufgrund der pulsartigen Anregung der Fluoreszenz ein breites Spektrum. Die durch eine Fluoreszenz bewirkte abklingende Exponentialfunktion entspricht im Frequenzbereich gesehen somit einer Summe von phasenverschobenen Sinus-Signalen. Das Ausgangssignal des Photodetektors wird einem Mischer zugeführt, der als Lokaloszillatorfrequenz ein Signal erhält, das auf die 10-MHz-Anregungsfrequenz synchronisiert ist und eine Frequenz von 490 MHz plus 25 Hz hat. Dadurch wird die Spektrallinie im Spektrum des Ausgangssignals des Photodetektors, die eine Frequenz von 490 MHz hat, durch den Mischer auf eine Niederfrequenz von 25 Hz heruntergemischt und einem Phasenmesser zugeführt. Der Phasenmesser erhält andererseits ferner ein auf die Wiederholrate des Lasers synchronisiertes Signal mit einer Frequenz von 490 MHz. Das Ausgangssinal des Mischers mit einer Frequenz von 25 Hz wird ebenfalls in den Phasenmesser eingegeben, um aus der Phasendifferenz die Abklingkonstante zu messen.

Die Aufgabe der vorliegenden Erfindung besteht darin, ein Fluoreszenzmeßkonzept zu schaffen, das miniaturisierbar und preisgünstig ist.

Diese Aufgabe wird durch eine Vorrichtung nach Anspruch 1 und durch ein Verfahren nach Anspruch 22 gelöst.

Der vorliegenden Erfindung liegt die Erkenntnis zugrunde, daß der große optische Aufwand zur Trennung von Fluoreszenz- und Anregungslicht, der im Stand der Technik getrieben wird, nicht mehr vertretbar ist, wenn einerseits Miniaturisierungsforderungen und andererseits Forderungen nach günstigeren Preisen erfüllt werden müssen und zudem ein Fluoreszenzmeßkonzept, das für die Prozeßtechnik geeignet ist, geschaffen werden soll, bei dem Störeinflüsse reduziert sind. Erfindungsgemäß wird der Aufwand zur Trennung von Fluoreszenz- und Anregungslicht und zur Unterdrückung von Fremdlicht auf der optischen Seite reduziert und auf die elektronische Signalverarbeitung verlagert. Dazu wird ein Referenzsignal von einem Modulationssignal, durch das eine optische Quelle moduliert wird, abgeleitet und mit dem elektrischen Meßsignal, das ein optischer Empfänger ausgibt, auf elektronische Art und Weise kombiniert, wobei die Phasenbeziehung des Referenzsignals und des Modulationssignals definiert ist.

Die erfindungsgemäße Verlagerung der Signalverarbeitung weg von der optischen Seite hin zur elektronischen Seite erlaubt ferner eine einfache Unterdrückung des Fremdlichts, indem das elektrische Meßsignal bezüglich der Modulationsfrequenz frequenzselektiv verstärkt wird, wodurch der Frequenzbereich, in dem die Modulationsfrequenz des Senders liegt, gegenüber dem umgebenden Frequenzbereich hervorgehoben wird, was zur Folge hat, daß das Fremdlicht unterdrückt wird.

Ein weiterer Vorteil des erfindungsgemäßen Konzepts besteht darin, daß die Fluoreszenzdaten "Intensität" und "Phase" bzw. Zeitkonstante bei einer Fluoreszenzmessung unabhängig voneinander erfaßt werden können.

Ein weiterer Vorteil der vorliegenden Erfindung besteht darin, daß aufgrund einer elektronischen Reduzierung von optischen Störeinflüssen dieser Aspekt bei der Auslegung der optischen Seite des Systems nicht so stark berücksichtigt werden braucht, derart, daß die optische Seite des Systems auf das maximale Aufsammeln des Fluoreszenzlichts und nicht primär auf eine möglichst gute Trennung von Anregungs- und Fluoreszenzlicht optimiert werden kann.

Ein weiterer Vorteil der vorliegenden Erfindung besteht darin, daß durch Verwendung einer LED als optische Quelle und einer Photodiode als optischer Empfänger eine kleine Baugröße erreicht werden können, wobei LED und Photodiode ohne weiteres mit einer elektronischen Signalverarbeitungseinrichtung gekoppelt werden können.

Ein weiterer Vorteil der vorliegenden Erfindung besteht darin, daß eine kleine Baugröße zusätzlich durch ein direkt auf der Photodiode aufgebrachtes optisches Filter erreicht werden kann, da das Filter lediglich hinsichtlich der Verhinderung einer Übersteuerung der Photodiode dimensioniert und angeordnet zu werden braucht, und nicht primär für eine Trennung von Anregungs- und Fluoreszenzlicht bzw. für eine Abschirmung von Fremdlicht eingesetzt werden muß, da diese Aufgaben durch eine elektronische Signalverarbeitungseinrichtung übernommen werden.

Bevorzugte Ausführungsbeispiele der vorliegenden Erfindung werden nachfolgend bezugnehmend auf den beiliegenden Zeichnungen detaillierter erläutert. Es zeigen:

Fig. 1    ein prinzipielles Schaltbild für ein erfindungsgemäßes Fluoreszenzmeßsystem;

Fig. 2    eine mögliche Anordnung der in Fig. 1 gezeigten optischen Zelle;

Fig. 3    eine erfindungsgemäße Fluoreszenzmeßanordnung, bei der die elektronische Signalverarbeitungseinrichtung detaillierter dargestellt ist; und

Fig. 4    ein erfindungsgemäßes Fluoreszenzmeßsystem, bei dem eine Alternative für die elektronische Signalverarbeitungseinrichtung dargestellt ist.

Fig. 5    eine Gegenüberstellung von Anregungslicht und Fluoreszenzlicht bei einer Fluoreszenzmessung im Frequenzbereich; und

Fig. 6    eine Darstellung zur Veranschaulichung der IQ-Demodulation, um Betrag und Phase des Anregungslichts zu bestimmen.

Bevor detaillierter auf die erfindungsgemäße Vorrichtung zum Bestimmen einer Fluoreszenz einer Probe eingegangen wird, seien einige theoretische Grundlagen und Definitionen gegeben, die für Fluoreszenzmessungen von Belang sind. Wenn eine fluoreszierender Stoff hinsichtlich seines Energiediagramms betrachtet wird, so sind zumindest zwei Enegiezustände von Belang. Der fluoreszenzerzeugende Stoff kann durch ein Anregungslicht vom Grundenergiezustand in einen höheren Energiezustand angeregt werden, aus dem er, wie es in der Technik bekannt ist, selbständig wieder in den Grundenergiezustand zurückkehrt. Diese Rückehr vom höheren Energiezustand in den Grundenergiezustand kann unter Emission von Fluoreszenzlicht stattfinden. Ein solcher Übergang wird als Fluoreszensübergang bezeichnet. Da neben existiert auch ein sog. Quench-Übergang, durch den der Stoff ebenfalls vom höheren Energiezustand in den Grundzustand zurückkehren kann. Die Gesamt-Zeitkonstante, mit der der Stoff vom höheren Energiezustand in den Grundzustand zurückkehrt, berechnet sich aus der Abklingzeitkonstante des Fluoreszenzübergangs und aus der Abklingzeitkonstante des Quench-Übergangs. Insbesondere ergibt sich der reziproke Wert der Abklingzeitkonstante aus der Summe des reziproken Werts des Fluoreszenz-Zeitkonstante und des reziproken Werts der Quench-Zeitkonstante. Wie es in der Technik bekannt ist, sind die Fluoreszenzzeitkonstante und die Quench-Zeitkonstante über die Stern-Volmer-Beziehung miteinander verknüpft.

Wird das Anregungslicht, um den fluoreszenzfähigen Stoff vom Grundzustand in den höheren Energiezustand zu bringen, schlagartig abgeschaltet, so nimmt die Intensität der Fluoreszens nach einem Exponentialgesetz mit der Zeit als Variablen ab. Dieses Exponentialgesetz wird einer seit durch die Fluoreszenzintensität zum Zeitpunkt des Abschaltens, d. h. bei einer Zeit t = 0, definiert, und andererseits durch die Fluoreszenzzeitkonstante $\tau$. Per Definition ist die Zeitkonstante als die Zeit definiert, zu der die Intensität der Fluoreszenz das 0,3679-fache der Intensität zum Zeitpunkt t = 0 beträgt. Genauer gesagt ist dann die Anfangsintensität zum Zeitpunkt des Abschaltens des Anregungslichts auf das 1/e-fache abgeklungen, wobei e die Eulersche Zahl ist.

Wie es bereits erwähnt worden ist, bezieht sich die vorliegende Erfindung auf eine Fluoreszenzmessung im Frequenzbereich, die sich von einer Fluoreszenzmessung im Zeitbereich in zwei wesentlichen Punkten unterscheidet. Bei der Messung im Zeitbereich wird der fluoreszenzfähige Stoff üblicherweise durch steilflankige Impulse angeregt, während bei einer Fluoreszenzmessung im Frequenzbereich die Anregung durch Intensitäts-moduliertes Licht stattfindet. Bei der Fluoreszenzmessung im Zeitbereich wird die abklingende Intensität dann direkt gemessen, um daraus sowohl Anfangsintensität als auch Abklingzeitkonstante zu ermitteln. Dagegen findet bei der Fluoreszenzmessung im Frequenzbereich eine Messung der Intensität und Phasenverschiebung des ebenfalls intensitätsmodulierten Fluoreszenzlichts statt, um daraus wiederum die beiden charakteristischen Parameter der Fluoreszenz zu bestimmen, nämlich die Anfangsintensität und die Abklingzeitkonstante.

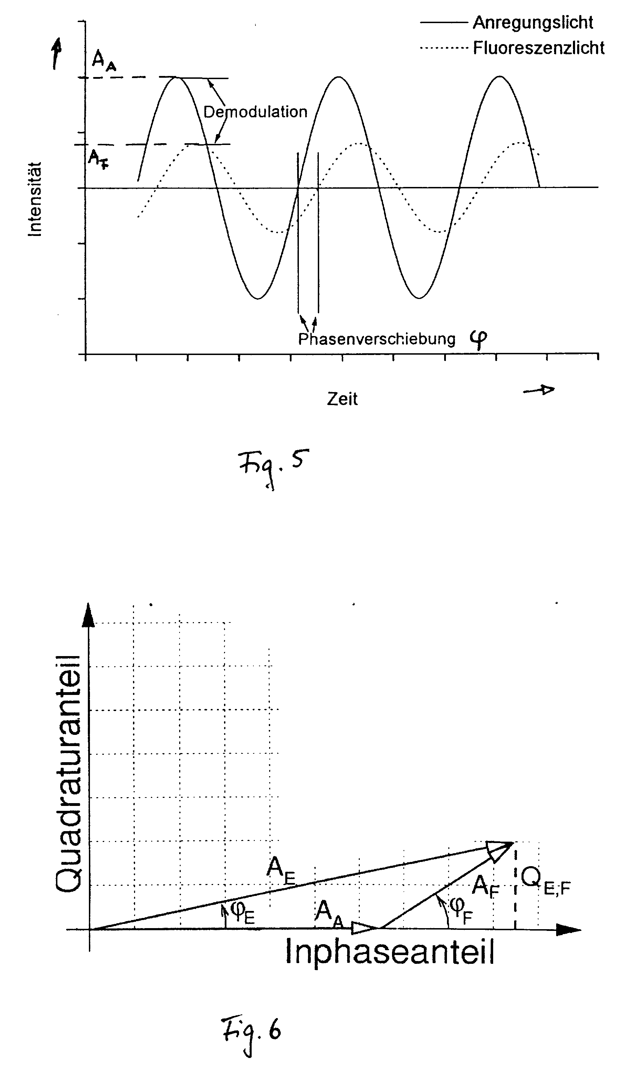

Im nachfolgenden wird auf Fig. 5 Bezug genommen, um die Situation einer Fluoreszenzmessung im Frequenzbereich näher zu beleuchten. In Fig. 5 ist entlang der Ordinate die Intensität aufgetragen, während entlang der Abzisse die Zeit aufgetragen ist. Die durchgezogene Linie ist das bei der Fluoreszenzmessung im Frequenzbereich modulierte Anregungslicht, wobei aus Übersichtlichkeitsgründen in Fig. 5 eine sinusförmige Modulation gezeigt ist. Die gepunktete Kurve dagegen stellt das von der fluoreszierenden Probe abgegebene Fluoreszenzlicht dar, das, wie es in Fig. 5 gezeigt ist, eine gewisse Phasenverschiebung zum Anregungslicht aufweist. Ferner unterscheiden sich die maximalen Amplituden sowohl des Anregungslichts als auch des Fluoreszenzlichts um einen bestimmten Betrag, der in Fig. 5 als Demodulation bezeichnet ist.

Für die nachfolgende Betrachtung wird die maximale Amplitude des Anregungslichts als $A_A$ bezeichnet, während die maximale Amplitude des Fluoreszenzlichts als $A_F$ bezeichnet wird. Die in Fig. 5 eingezeichnete Demodulation ergibt sich dadurch, daß das Anregungslicht mit einem Modulationssignal intensitätsmoduliert ist, das eine von Null verschiedene Modulationsfrequenz hat. Der interessierende Wert ist jedoch die Amplitude des Fluoreszenzlichts für eine "gedachte" Frequenz, die gegen Null geht, wobei dieser Wert als $A_{F0}$ bezeichnet wird. Die Amplitude des Fluoreszenzlichts bei einer bestimmten Modulationsfrequenz f steht folgendermaßen mit der Amplitude $A_{F0}$ des Fluoreszenzlichts für eine Frequenz, die gegen Null geht, und der Modulationsfrequenz sowie der Abklingzeitkonstante $\tau$ in Beziehung:

$$A_F = \frac{A_{F0}}{\sqrt{1 + \omega^2 \tau^2}}$$

Die Abklingzeitkonstante $\tau$ der Fluoreszenz ergibt sich folgendermaßen aus der Phasenverschiebung zwischen Anregungslicht und Fluoreszenzlicht:

$$\tan \varphi = \omega\tau \qquad \omega = 2\pi f$$

Zur Charakterisierung der Fluoreszenz mittels einer Frequenzbereichsmessung kann somit die Amplitude des Fluoreszenzlichts für eine Frequenz, die gegen Null geht, d. h. $A_{F0}$ bestimmt werden, um die Fluoreszenzintensität zu erhalten, während sich die Abklingzeitkonstante $\tau$ der Fluoreszenz direkt aus der Phasenverschiebung zwischen Anregungslicht und Fluoreszenzlicht ergibt. Problematisch bei der Fluoreszenzmessung im Frequenzbereich ist jedoch die Tatsache, daß Anregungslicht und Fluoreszenzlicht an einem Detektor nicht getrennt erfaßt werden können, sondern daß ein optischer Empfänger oder Detektor ein elektrisches Meßsignal ausgibt, das sowohl einen Fluoreszenzanteil, d. h. das Fluoreszenzlicht, als auch einen Anregungsanteil, d. h. das Anregungslicht, enthält. Zur Bestimmung der Fluoreszenz ist jedoch lediglich das Fluoreszenzlicht von Interesse. Bereits jetzt sei darauf hingewiesen, daß bei der vorliegenden Erfindung die Trennung zwischen Anregungslicht und Fluoreszenzlicht mittels einer IQ-Demodulation durchgeführt wird, um dem Quadraturanteil des Meßsignals, d. h. des Signals aus Anregungslicht und Fluoreszenzlicht, zu erhalten, um daraus dann die beiden charakteristischen Parameter für die Fluoreszenz, d. h. $A_{F0}$ und $\tau$, zu errechnen. Das Anregungslicht wird erfindungsgemäß somit nicht auf der optischen Seite, sondern auf der elektronischen Seite unterdrückt.

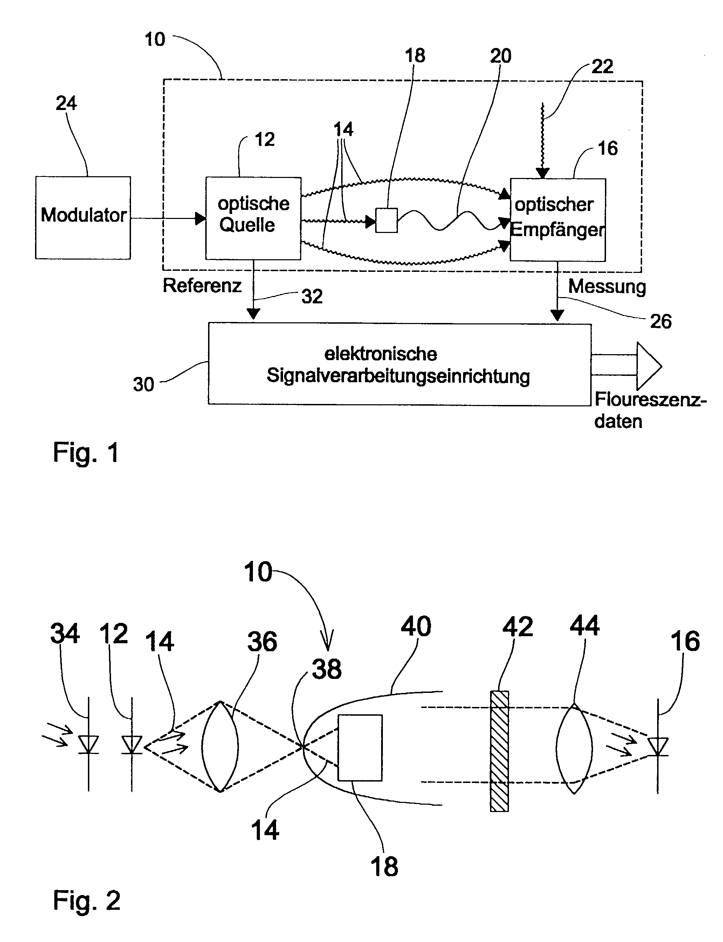

Fig. 1 zeigt ein prinzipielles Blockschaltbild für die vorliegende Erfindung. In einer optischen Zelle 10 sind eine optische Quelle 12 zur Erzeugung eines Anregungslichts 14 und ein optischer Empfänger 16 angeordnet. Ein Teil des Anregungslichts 14 wird in eine Probe 18 eingestrahlt, derart, daß in derselben eine Fluoreszenz erzeugt wird, die zu einem Fluoreszenzlicht 20 führt, das eine längere Wellenlänge als das Anregungslicht 14 hat, wie es schematisch in Fig. 1 dargestellt ist. Neben Teilen des Anregungslichts 14 und des Fluoreszenzlichts 20 erreicht ferner Fremdlicht 22 den optischen Empfänger 16. Das Fremdlicht 22 ist typischerweise Umgebungslicht der optischen Zelle 10.

Die optische Quelle 12 wird durch einen Modulator 24 intensitätsmoduliert, derart, daß ein elektrisches Meßsignal 26, das vom optischen Empfänger ausgegeben wird, ebenfalls eine Komponente bei der Frequenz aufweist, die der Modulationsfrequenz des Modulators 24 entspricht. Diese Komponente umfaßt sowohl das modulierte Anregungslicht 14 als auch das modulierte Fluoreszenzlicht 20. Das Meßsignal 26 umfaßt ferner eine Fremdlichtkomponente 22 sowie weitere durch den optischen Empfänger 16 erzeugte Störsignale. Erfindungsgemäß sind sowohl die optische Quelle 12 als auch der optische Empfänger 16 mit einer elektronischen Signalverarbeitungseinrichtung 30 gekoppelt. Die elektronische Signalverarbeitungseinrichtung kombiniert das Meßsignal 26 mit einem Referenzsignal 32, dessen Phasenbeziehung zum Modulationssignal des Modulators 24 definiert ist. Die elektronische Signalverarbeitungseinrichtung 30 gibt schließlich Fluoreszenzdaten aus, die Intensitäts- und Phaseninformationen des Fluoreszenzlichts 20 darstellen, wobei die elektronische Signalverarbeitungseinrichtung durch Kombination des Referenzsignals 32 mit dem Meßsignal 26 sicherstellt, daß Anregungsanteile in dem Meßsignal 26 unterdrückt werden, derart, daß eine hohe Trennung zwischen Anregungslicht und Fluoreszenzlicht auf elektronischem Wege erreicht wird.

Fig. 2 zeigt eine mögliche Anordnung der optischen Zelle 10. Dieselbe umfaßt eine optische Quelle 12, die bevorzugterweise als Photodiode ausgelegt ist. Die optische Quelle 12 umfaßt ferner eine Überwachungs- oder Monitordiode 34, die das von der optischen Quelle 12 emittierte Licht, das durch den Modulator 24 intensitätsmoduliert ist, unmittelbar wieder empfängt und in das elektrische Referenzsignal umsetzt.

Gemäß einem bevorzugten Ausführungsbeispiel der vorliegenden Erfindung wird das Anregungslicht 14 einer Bündelungslinse 36 zugeführt, die das dasselbe derart fokussiert, daß der Brennpunkt in der Nähe eines Lochs 38 in einem Parabolspiegel 40 liegt, in dem ferner die Probe 18 angeordnet ist. Das Anregungslicht 14 erzeugt eine Fluoreszenz in der Probe 18, wobei das Fluoreszenzlicht entweder direkt zu dem optischen Empfänger 16 hin gerichtet wird oder durch den Parabolspiegel gesammelt und zu dem optischen Empfänger 16 hin reflektiert wird.

Der optische Empfänger 16 ist vorzugsweise ebenso wie die Monitordiode 34 als Photodiode 16 ausgeführt. Zwischen der Probe und der Photodiode 16, die als optischer Empfänger fungiert, ist vorzugsweise ein optisches Bandfilter 42 angeordnet, dem eine Empfangslinse 44 nachgeschaltet ist, derart, daß das Anregungslicht 14 durch das optische Filter unterdrückt wird, während das Fluoreszenzlicht durchgelassen und durch die Linse 44 auf den aktiven Bereich der Photodiode 16 fokussiert wird.

Erfindungsgemäß ist die optische Zelle so ausgelegt, daß ein möglichst großer Anteil des Fluoreszenzlichts die Photodiode durch das optische Filter 42 erreicht. Aufgrund der elektronischen Signalverarbeitung des Meßsignals kann die optische Anordnung auf das maximale Aufsammeln des Fluoreszenzlichts optimiert werden, während eine möglichst gute Trennung von Anregungs- und Fluoreszenzlicht durch optische Mittel eher sekundär ist. Die in Fig. 2 gezeigte Anordnung für die optische Zelle 10 verwendet daher den Parabolspiegel 40, der dazu führt, daß der größte Teil des Fluoreszenzlichts auf die Photodiode 16 gebündelt wird, wobei eine Abschwächung des Anregungslichts 14 lediglich durch die Absorption desselben in der Probe 18 und durch Absorption in dem optischen Filter 42 bewirkt wird.

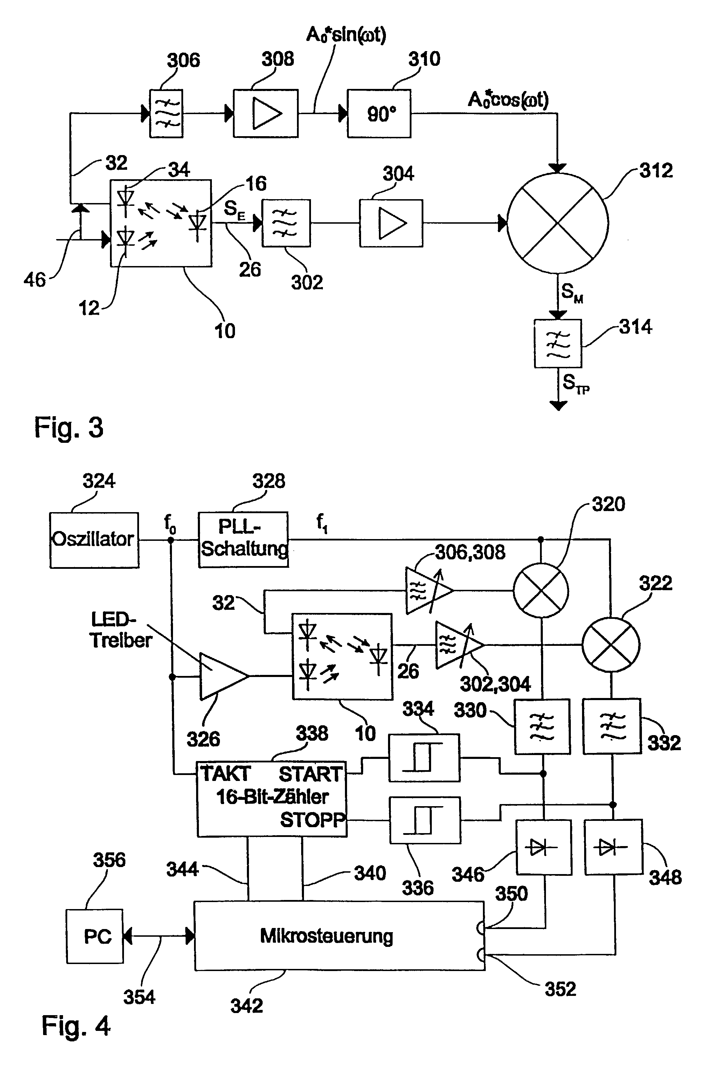

Fig. 3 zeigt eine mögliche Ausgestaltung der elektronischen Signalverarbeitungseinrichtung 30 (Fig. 1). Das durch den optischen Empfänger 12 emittierte Anregungslicht wird durch den Modulator 24 z. B. sinusförmig mit einer oder mehreren verschiedenen Frequenzen, die in der Größenordnung der reziproken Lebensdauer $1/\tau$ liegen, moduliert. Dieses Anregungslicht wird wiederum durch die Monitordiode 34 in ein elektrisches Signal verwandelt, um ein Referenzsignal 32 zu erhalten.

Die Empfangsdiode 16, d. h. der optische Empfänger, liefert das Meßsignal $S_E$ 26, das zum einen einen Fluoreszenzanteil und zum anderen einen Anregungsanteil aufweist. Gemäß einem Aspekt der vorliegenden Erfindung wird das Empfangssignal $S_E$ durch ein Bandpaßfilter 302 geleitet und durch einen Verstärker 304 verstärkt. Das Bandpaßfilter 302 ist auf die Modulationsfrequenz des Modulators 24 abgestimmt. Damit wird das Empfangssignal $S_E$ frequenzselektiv für die Modulationsfrequenz verstärkt, wodurch einfallendes Fremdlicht 22 (Fig. 1) wirksam unterdrückt wird.

Die elektronische Signalverarbeitungseinrichtung 30 umfaßt ferner einen weiteren Bandpaß 306 und einen weiteren Verstärker 308 zur frequenzselektiven Verstärkung des Referenzsignals 32, um ein Signal mit einer Amplitude $A_0$ zu erhalten, dessen Frequenz der Modulationsfrequenz entspricht, und das zu dem Modulationssignal phasengleich ist, da dasselbe durch die Monitordiode 34 direkt am Empfänger 12 abgeleitet worden ist.

Für Fachleute ist es offensichtlich, daß das Referenzsignal 32 auch aus dem Modulationssignal selbst abgeleitet werden kann, wobei in diesem Fall auf die Monitordiode 34 verzichtet werden kann. Als Referenzsignal 32 kann somit auch das Ansteuersignal für die Sender-LED 12 verwendet werden, wie es durch einen gestrichelten Pfeil 46 in Fig. 3 schematisch angedeutet ist.

Das Ausgangssignal des Verstärkers 308, das in Phase mit dem Modulationssignal ist, wird durch einen Phasenschieber 310 um 90° phasenverschoben, um ein zum Modulationssignal orthogonales Signal zu erhalten. Sowohl das optional frequenzselektiv verstärkte Empfangssignal $S_E$ als auch das zum Modulationssignal orthogonale Signal werden in einen Mischer 312 eingespeist, damit die eingespeisten Signale in demselben multipliziert werden. Solange der Empfänger 16 und die nachgeschaltete analoge Signalverarbeitung im linearen Bereich arbeiten, stellt das Empfangssignal $S_E$ die Addition zweier phasenverschobener Sinusschwingungen dar, die aus dem aufgefangenen Fluoreszenzlicht (Fluoreszenzanteil) und dem Anregungslicht (Anregungslichtanteil) resultieren. Diese Summe wird in dem Mischer 312 mit dem zum Modulationssignal des Anregungslichts orthogonalen Anteil multipliziert, wodurch nach dem Prinzip der IQ-Demodulation ein Mischsignal $S_M$ entsteht, das einen Gleichanteil aufweist, der der Phasenverschiebung zwischen Anregungslicht und Fluoreszenzlicht entspricht, und das einen hochfrequenten Anteil aufweist, der durch ein Tiefpaßfilter 314 eliminiert wird, derart, daß das tiefpaßgefilterte Signal STP keinen Anregungslichtanteil mehr aufweist.

Im folgenden wird zum Verständnis eine mathematische Herleitung gegeben, wobei die nachfolgende Tabelle die verwendeten Formelzeichen und ihre Bedeutung liefert.

| Formelzeichen | Bedeutung |
| --- | --- |
| $A_F$ | Amplitude des elektrischen Signales am Empfänger verursacht durch Fluoreszenz. |
| $A_A$ | Amplitude des elektrischen Signales am Empfänger verursacht durch Primärlicht. |
| $A_0$ | Amplitude des orthogonalen Signales |
| $\varphi$ | Phasendifferenz zwischen Primär- und Fluoreszenzlicht. |

Das elektrische Signal ST am Empfänger lautet:

$$S_E = A_F \sin(\omega t + \varphi) + A_A \sin(\omega t) \tag{1}$$

Die Multiplikation des Empfangssignals $S_E$ mit dem orthogonalen Signal nach dem Phasenschieber 310 durch den Mischer 312 führt zu dem Mischsignal $S_M$:

$$S_M = S_E \cdot A_O \cos(\omega t) = \\ \frac{1}{2} A_F A_O \big[ \sin(\varphi) + \sin(2\omega t) \big] + \frac{1}{2} A_A A_O \big[ \sin(0) + \sin(2\omega t) \big] \tag{2}$$

Eine Tiefpaßfilterung durch das Tiefpaßfilter 304 führt schließlich zum tiefpaßgefilterten Signal $S_{TP}$:

$$S_M \overset{TP}{\Rightarrow} S_{TP} = \frac{1}{2} A_F A_O \sin(\varphi) \tag{3}$$

Damit enthält das tiefpaßgefilterte Signal $S_{TP}$ keinen Anteil mehr, der auf das Anregungslicht zurückzuführen ist. Durch Messung von $S_{TP}$ bei zwei Frequenzen kann somit die Amplitude $A_F$ des elektrischen Signals am Empfänger, das durch Fluoreszenz verursacht wurde, und die Lebensdauer $\tau$ oder Fluoreszenz ermittelt werden. Der Quadraturanteil $S_{TP}$ kann auch aus dem Winkel und der Amplitude errechnet werden.

Während Fig. 3 eine Alternative zur Ausgestaltung der elektronischen Signalverarbeitungseinrichtung 30 zeigt, ist in Fig. 4 eine andere Alternative für die elektronische Signalverarbeitungseinrichtung dargestellt, die im Sinne einer effizienten Messung bevorzugt wird. Die erfindungsgemäße Vorrichtung, die in Fig. 4 dargestellt ist, umfaßt wieder eine optische Zelle 10 mit einer optischen Quelle in Form einer LED, mit einer Monitordiode und mit einem optischen Empfänger in Form einer Photodiode. Sowohl das Meßsignal 26 als auch das Referenzsignal 32 werden zur Fremdlichtunterdrückung durch einen Verstärker 302, 304 mit Bandpaßcharakteristik bzw. durch einen Verstärker 306, 308 mit Bandpaßcharakteristik frequenzselektiv verstärkt. Die beiden Verstärker sind ferner zu Abgleich- und Kalibrationszwecken einstellbar, wobei ferner darauf geachtet werden muß, daß sowohl ein nachfolgender Referenzmischer 320 als auch ein Meßmischer 322 nicht übersteuert werden, derart, daß sie im linearen Bereich arbeiten können.

Die benötigte Modulationsfrequenz $f_0$ wird von einem Oszillator 324 abgeleitet, der vorzugsweise als Quarzoszillator ausgeführt ist, wobei die benötigte Modulationsfrequenz $f_0$ auf bekannte Art und Weise von der Frequenz des Schwingquarzes abgeleitet wird. Das Ausgangssignal des Oszillators 324 mit der Frequenz $f_0$ wird in einen LED-Treiber 326 eingespeist, der die Sender-LED intensitätsmoduliert. Das Ausgangssignal des Oszillators 324 mit der Modulationsfrequenz $f_0$ wird ferner in eine PLL-Schaltung 328 eingespeist, die ausgangsseitig ein Signal mit einer Frequenz $f_1$ erzeugt, die in festem Verhältnis zum Oszillatorausgangssignal ist.

Sowohl das Referenzsignal 32 als auch das Meßsignal 26 werden mit dem Ausgangssignal der PLL-Schaltung 328 über die beiden Mischer 320 und 322 in einen Zwischenfrequenzbereich heruntergemischt und einen der Frequenz-Tiefpaß 330 bzw. durch einen Referenztiefpaß 332 tiefpaßgefiltert. Das Ausgangssignal des Referenz-Tiefpaßfilters wird einem Referenz-Schmitt-Trigger 334 zugeführt, während das Ausgangssignal des Meß-Tiefpaßfilters 332 einem Meß-Schmitt-Trigger 336 zugeleitet wird. Beide Schmitt-Trigger 334, 336 sind mit einem zähler 338 gekoppelt, der vorzugsweise als 16-Bit-Zähler ausgeführt ist. Durch ein Ausgangssignal des Referenz-Schmitt-Triggers wird der Zähler 338 gestartet, während ein Ausgangssignal des Meß-Schmitt-Triggers 336 bewirkt, daß der Zähler das Zählen wieder beendet. Der Zähler 338 umfaßt ferner einen Takteingang, der mit dem Oszillator 324 verbunden ist.

Der Zähler zählt die Anzahl der Taktzyklen zwischen einem Nulldurchgang des Referenzsignals und einem Nulldurchgang des Meßsignals. Unter Verwendung des erhaltenen Zählwerts und der Taktfrequenz des Oszillators 324 kann die Phasenverschiebung zwischen dem Referenz- und dem Meßsignal ermittelt werden, die über einen Parallelbus 340 einer parallelen Schnittstelle einer Mikrosteuerung 342 zugeführt wird. Der Zähler 338 umfaßt eine weitere Verbindung 344 mit der Mikrosteuerung 342, derart, daß die Mikrosteuerung den Betrieb des Zählers geeignet anleiten kann. Somit kann die Phasenverschiebung zwischen dem Anregungslicht und dem Fluoreszenzlicht bestimmt werden, um die Abfallzeit der Fluoreszenz zu erhalten.

Um die Intensität der Fluoreszenz bestimmen zu können, umfaßt die elektronische Signalverarbeitungseinrichtung 30 ferner einen Referenzgleichrichter 346 und einen Meßgleichrichter 348, deren Ausgangssignale einem analogen Referenz-Eingang 350 bzw. einem analogen Meß-Eingang 352 der Mikrosteuerung 342 zugeführt werden, um analog/digital-gewandelt zu werden, um einen Quotienten der beiden Amplituden zu erhalten, durch den auf die Fluoreszenzintensität geschlossen werden kann. Die Mikrosteuerung 342 ist über eine Datenleitung 354 mit einem Personalcomputer 356 verbunden, um über die Datenleitung 354 Fluoreszenzdaten zu dem Personalcomputer 346 liefern zu können, damit sie dort z. B. angezeigt, ausgedruckt oder gespeichert werden können.

Die in Fig. 4 gezeigte Schaltungsanordnung schafft durch Mischung sowohl des Referenzsignals 32 als auch des Meßsignals 26 auf einen leicht verarbeitbaren Zwischenfrequenzbereich mittels des PLL-Signals mit der Frequenz $f_1$, das von dem Oszillator $f_0$ abgeleitet worden ist, daß im Gegensatz zu dem in Fig. 3 gezeigten Ausführungsbeispiel in Fig. 4 eine einzige Messung bei einer Modulationsfrequenz $f_0$ ausreicht. Wichtig ist, daß sowohl der Meß-Mischer 322 als auch der Referenz-Mischer 320 von demselben PLL-Signal getrieben werden, derart, daß die Phasenbeziehung des Referenzsignals 32 zum Meßsignal 26 durch die Mischung nicht ungleichmäßig beeinträchtigt wird, derart, daß die Phasenverhältnisse zwischen Meßpfad und Referenzpfad auch nach der Mischung klar sind. Die getrennte Erfassung der Informationen Amplitude und Phasendifferenz durch die Gleichrichter 346, 348 bzw. durch die Schmitt-Trigger 334, 336 und den Zähler 338 stellt einen wesentlichen Unterschied zu Systemen dar, bei denen der Phasenwinkel zum Mischen der beiden zu vergleichenden Signale auf die Frequenz Null und durch Messung der entstehenden Gleichspannung bestimmt wird.

Im Nachfolgenden wird detaillierter auf die Funktionsweise der in Fig. 4 gezeigten Anordnung eingegangen. Die optische Zelle 10 besteht, wie es bereits erwähnt wurde, aus einer LED als Lichtquelle und aus einer Photodiode als Empfänger, die direkt aufeinander ausgerichtet sind. Zusätzlich wird das Anregungslicht dort auf eine Monitordiode geleitet. Im Lichtweg zwischen Sender und Empfänger befindet sich das Meßmedium und das optische Filter zur Abschwächung des Anregungslichts. Diese optische Filtermaßnahme wird vorzugsweise verwendet, um den Empfänger, insbesondere die Empfangsdiode und die nachgeschalteten Verstärker 302, 304, nicht zu übersteuern, damit derselbe nach wie vor im linearen Bereich arbeitet.

Die Mikrosteuerung 342 übernimmt einerseits die notwendige Ansteuerung für die A/D-Wandler an den Eingängen 350, 352 und den Zähler 338. Andererseits führt die Mikrosteuerung 342 eine notwendige Vorverarbeitung der Signale, wie z. B. eine Mittelwertbildung, durch, und dieselbe stellt ferner, wie es bereits erwähnt wurde, die Kommunikation mit einer Benutzerschnittstelle in Form eines Personalcomputers 356 sicher.

Systemtheoretisch läßt sich die in Fig. 4 dargestellte erfindungsgemäße Vorrichtung folgendermaßen beschreiben, wobei die nachfolgende Tabelle die verwendeten Formelzeichen und ihre Bedeutung liefert.

| Formelzeichen | Bedeutung |
|---|---|
| $A_F$ | Amplitude des elektrischen Signales am Empfänger verursacht durch Fluoreszenz. |
| $A_A$ | Amplitude des elektrischen Signales am Empfänger verursacht durch Primärlicht. |
| $A_{Os:}$ | Amplitude des Oszillators |
| $A_{PLL}$ | Amplitude des mit der PLL erzeugten Signales |
| $\varphi$ | Phasendifferenz zwischen Primär- und Fluoreszenzlicht. |
| $k,l,n$ | ganze natürliche Zahlen |

Der Oszillator erzeugt folgendes Signal:

$$S_{0sz}(t) = A_{Os:} \sin(\omega_0 t)$$
$$mit \quad \omega_0 = 2\pi f_0 \tag{4}$$

Die optische Zelle liefert als Signal (ohne Anregungslichtanteil im Empfangssignal):

$$S_F(t) = A_F \sin(\omega_0 t + \varphi) \tag{5}$$

In Gleichung (2) steht $\varphi$ für die gesamte Phasenverschiebung. Diese setzt sich aus einem elektronischen und einem optischen Anteil zusammen, wobei der elektronische Anteil herauskalibriert werden kann, wenn die Photodiode beispielsweise direkt mit Anregungslicht in einem Kalibrierdurchgang bestrahlt wird und die auf der Leitung 340 gemessene Phasendifferenz durch einen Phasenschieber an geeigneter Stelle im System auf Null kalibriert wird. Eine andere Art und Weise der Kalibrierung besteht darin, die Phasendifferenz im Kalibrierdurchgang zu speichern und von einer ermittelten Phasendifferenz im Meßdurchgang abzuziehen.

Die PLL-Schaltung 328 liefert folgendes Ausgangssignal:

$$S_{PLL}(t) = A_{PLL} \sin\left(\frac{k}{l} \omega_0 t\right)$$
$$mit \quad 2\pi f_1 = \frac{k}{l} \omega_0 \tag{6}$$

Die Konstanten k und l sind Teilerfaktoren der PLL. An den beiden Mischern ergeben sich somit folgende Ausgangssignale:

$$S_{M0}(t) = A_{0sz}\sin(\omega_0 t)\cdot A_{PLL}\sin\left(\frac{k}{l}\omega_0 t\right)$$

$$S_{M0}(t) = \frac{1}{2}A_{0sz}A_{PLL}\left(\cos\left(\left(1-\frac{k}{l}\right)\omega_0 t\right)-\cos\left(\left(1+\frac{k}{l}\right)\omega_0 t\right)\right) \qquad (7)$$

$$S_{MF}(t) = A_F\sin(\omega_0 t + \varphi)\cdot A_{PLL}\sin\left(\frac{k}{l}\omega_0 t\right)$$

$$S_{MF}(t) = \frac{1}{2}A_F A_{PLL}\left(\cos\left(\left(1-\frac{k}{l}\right)\omega_0 t + \varphi\right)-\cos\left(\left(1+\frac{k}{l}\right)\omega_0 t + \varphi\right)\right) \qquad (8)$$

Nach der Tiefpaßfilterung (330, 332) bleiben folgende Signale übrig:

$$S_{M0TP}(t) = \frac{1}{2}A_{0sz}A_{PLL}\cos\left(\left(1-\frac{k}{l}\right)\omega_0 t\right) \qquad (9)$$

$$S_{MFTP}(t) = \frac{1}{2}A_F A_{PLL}\cos\left(\left(1-\frac{k}{l}\right)\omega_0 t + \varphi\right) \qquad (10)$$

Diese beiden Signale sind nun, wie erwartet, bei geeigneter Wahl von k und l niederfrequent und tragen als Informationen die Phasenverschiebung und die Demodulation. Wenn k beispielsweise zu 9.999 eingestellt wird und 1 zu 10.000 eingestellt wird, und wenn die Modulationsfrequenz 10 MHz beträgt, liegt die Frequenz der Signale vor den Tiefpaßfiltern 330, 332 bei 1 kHz.

Durch die Gleichrichter 346, 348 werden beide Signale gleichgerichtet, wobei die Gleichrichter als Spitzenwertgleichrichter ausgeführt sind. Die Mikrosteuerung 342 führt eine Division der beiden an den Eingängen 350, 352 eingespeisten Werte durch. Die Demodulation bezüglich der Oszillatoramplitude ergibt sich somit zu:

$$D = \frac{S_{MFTP}(t)}{S_{A0TP}(t)} = \frac{A_F}{A_{0sz}} \qquad (11)$$

Die Phasenmessung erfolgt durch Bestimmen der Zeit zwischen zwei positiven Nulldurchgängen der beiden Signale. Hierzu erfolgt eine Umwandlung in Rechteckimpulse durch die Schmitt-Trigger 334, 336 und eine Zuführung zu dem Start-Stopp-Zähler 338. Dieser wird, wie es bereits erwähnt wurde, durch den Quarzoszillator 324 getaktet. Somit wird eine Periode des Signals in n Teile unterteilt:

$$\frac{1}{1-\frac{k}{l}} = n \qquad (12)$$

Es passen sozusagen n Schwingungen des Oszillators 324 in eine Periode des Signals. Da die PLL-Schaltung nur ganzzahlige k- und l-Werte verarbeiten kann und da es sinnvoll ist, für n ebenfalls eine ganze Zahl zu wählen, existieren nur spezielle Lösungen. Eine Gruppe von Lösungen gehorcht folgender Beziehung:

$$n = l = k+1 \qquad (13)$$

Es sei darauf hingewiesen, daß in dem in Fig. 4 gezeigten Blockschaltbild in einer praktischen Ausführung vorhandene Regelkreise zur Stabilisierung der Lichtstärke und der Verstärkung der Empfängerverstärker weggelassen worden sind, um eine bessere Übersichtlichkeit zu erreichen.

Im nachfolgenden wird näher auf die Ermittlung der beiden charakteristischen Parameter für die Fluoreszenz, d. h. $A_{F0}$ und $\tau$ eingegangen. Es sei noch einmal darauf hingewiesen, daß das in Fig. 3 gezeigte Ausführungsbeispiel, wenn der Phasenschieber 310 sowie der Mischer 312 und der Tiefpaß 314 analog implementiert sind, eine analoge IQ-Demodulation durchführt, wonach das Tiefpaßsignal STP entsprechend ausgewertet wird, um $A_{F0}$ und $\tau$ zu erhalten. Wie es bereits ausgeführt wurde, geschieht dies durch eine Messung bei zwei unterschiedlichen Modulationsfrequenzen. Das in Fig. 4 gezeigte Ausführungsbeispiel führt dagegen die IQ-Demodulation im Gegensatz zu Fig. 3 numerisch durch. Dies hat den Vorteil, daß keine teuren analogen Elemente wie der Phasenschieber 310, der Mischer 312 und der Tiefpaß 314 (Fig. 3) realisiert werden müssen.

Wie es bereits ausgeführt wurde, führt die Kombination aus dem Schmitt-Triggern 334, 336 und dem Zähler 338 dazu, daß in der Mikrosteuerung 342 der Phasenwinkel zwischen dem Anregungslicht, d. h. dem Referenzsignal, und dem Meßsignal bestimmt, wobei sich das Meßsignal aus dem Anregungsanteil und dem Fluoreszenzanteil zusammensetzt, wie es bereits bezugnehmend auf Fig. 5 dargestellt worden ist.

Mittels des Gleichrichters 348 kann ferner die Amplitude des Meßsignals bzw. des von dem Meßsignal abgeleiteten ZF-Meßsignals bestimmt werden, während mittels des Gleichrichters 346 die Amplitude des Referenzsignals bzw. die Amplitude des von einem Modulationssignal abgeleiteten Referenzsignals bestimmt werden kann. Die Mikrosteuerung 342 und/oder der PC 356 führen nun eine numerische IQ-Demodulation durch, die bezugnehmend auf Fig. 6 näher erläutert wird.

Fig. 6 zeigt ein Zeigerdiagramm der interessierenden Größen zueinander. Insbesondere findet sich in Fig. 6, in der der Quadraturanteil entlang der Ordinate aufgetragen ist, während der In-Phase-Anteil entlang der Abzisse aufgetragen ist, das Meßsignal bzw. das von dem Meßsignal abgeleitete Signal $A_E$, d4en Anregungsanteil $A_A$ sowie das Fluoreszenzsignal, d. h. der Fluoreszenzanteil des Meßsignals bzw. des von dem Meßsignal (hier z. B. durch Abwärtsmischen) abgeleiteten Signals $A_E$. Aus Fig. 6 ist die zeigermäßige Addition des Anregungsteil $A_A$ und des Fluoreszenzanteils $A_F$ zu erkennen, die beide zusammen das Meßsignal bzw. das von dem Meßsignal abgeleitete Signal $A_E$ ergeben, wenn sie entsprechend ihren Phasenwinkeln addiert werden.

Wie es bereits erwähnt worden ist, ermittelt die Anordnung aus Schmitt-Triggern und Zähler den Phasenwinkel $\varphi_E$ zwischen dem Meßsignal und $A_E$ und dem Anregungsanteil $A_A$. Darüberhinaus liefert die Gleichrichterdiode 346 den Betrag des Meßsignals $A_E$.

Die Aufgabe der numerischen IQ-Demodulation besteht nun darin, den Phasenwinkel $\varphi_F$ sowie den Betrag des Fluoreszenzanteils $A_F$ zu bestimmen. Wie es aus der in Fig. 6 gegebenen In-Phase-Quadratur-Darstellung deutlich wird, sind die Quadraturanteile des Meßsignals $A_E$ und des Fluoreszenzanteils $A_F$ identisch. Der Quadraturanteil ist daher mit $Q_{E,F}$ bezeichnet, um auf diese Identität hinzuweisen. Der Quadraturanteil kann ohne weiteres durch Multiplikation des Betrags des Meßsignals mit dem Sinus des Phasenwinkels $\varphi_E$ bestimmt werden. Wenn ferner die Amplitude des Anregungsanteils $A_A$ bekannt ist, können sowohl Betrag als auch Phase des Fluoreszenzanteils $A_F$ ohne weiteres ermittelt werden.

Es wurde bereits darauf hingewiesen, daß das in Fig. 4 gezeigte Ausführungsbeispiel eine Fluoreszenzcharakterisierung unter Verwendung einer Messung mit nur einer Frequenz erlaubt, wenn der Anregungsanteil $A_A$ am Empfänger beispielsweise unter Verwendung einer speziellen Kalibriermessung mit einer bekannten Probe, die der zu messenden Probe sehr ähnlich kommt, bekannt ist.

Für eine allgemeine Messung ist jedoch der Anregungsanteil am optischen Empfänger im allgemeinen unbekannt, da er durch die Probe selbst bestimmt wird. Daher kann der Anregungsanteil $A_A$ im allgemeinen nicht zuverlässig vorhergesagt werden. Aus diesem Grund wird daher auch bei dem in Fig. 4 gezeigten Ausführungsbeispiel eine Fluoreszenzcharakterisierung unter Verwendung von zwei Messungen bei zwei verschiedenen Modulationsfrequenzen bevorzugt. Aus diesen zwei Messungen ergeben sich dann zwei Quadraturanteile des Fluoreszenzanteils $A_F$ bei zwei verschiedenen Frequenzen. Bei der weiteren Auswertung in der Mikrosteuerung bzw. in dem PC 356 wird für diesen Fall vorausgesetzt, daß der Fluoreszenzanteil $A_F$ von der Modulationsfrequenz unabhängig ist. Unter dieser Voraussetzung können dann die beiden Parameter, d. h. der Betrag des Fluoreszenzanteils sowie der Phasenwinkel des Fluoreszenzanteils, bestimmt werden. Eine Messung bei zwei Frequenzen ermöglicht es also, daß die Amplitude des Anregungsanteils am optischen Detektor nicht mehr bekannt sein muß. Unter Verwendung der beiden Gleichungen für $A_F$ und $\varphi_F$ ist es dann möglich, die charakteristischen Parameter $A_{F0}$ und $\tau$ der Fluoreszenz auszurechnen.

Die Verwendung von zwei Messungen bei unterschiedlichen Modulationsfrequenzen, um den Fluoreszenzanteil zu bestimmen, eröffnet weitere Möglichkeiten. Insbesondere kann eine bezugnehmend auf Fig. 6 beschriebene Messung für eine Vielzahl von Frequenzpaaren durchgeführt werden, woraufhin die einzelnen Ergebnisse gewichtet werden, um eine noch genauere Charakterisierung der Fluoreszenz, d. h. noch genauere Parameter $A_{F0}$ und $\tau$ zu erhalten. Für die Mittelung bzw. für die Kombination der Einzelergebnisse kann eine arithmetische Mittelung, eine geometrische Mittelung, eine empirisch gewonnene Gewichtung von Ergebnissen bei bestimmten Modulationsfrequenzpaaren, etc. angewendet werden.

In der Praxis muß vor der Messung eine Kalibrations der Meßanordnung durchgeführt werden, um einen möglichst frequenzunabhängigen Frequenzgang der gesamten Anordnung zu erhalten. Zu diesem Zweck wird eine nicht-fluoreszierende Probe in die Meßzelle gebracht, woraufhin die gesamte Messung unter Verwendung einer bestimmten Modulationsfrequenz durchgeführt wird. Bei einer nicht-kalibrierten Anordnung wird sich dennoch, trotz nicht-vorhandener Fluoreszenz ein Phasenwinkel $\varphi_E$ (Fig. 6) ergeben, der durch einen Phasenschieber im Referenzzweig und/oder im Meßzweig zu Null gebracht wird. Der Einstellungswert des Phasenschiebers wird dann in einer Tabelle in Zuordnung zu der verwendeten Modulationsfrequenz abgespeichert, um bei einer späteren Messung mit fluoreszierender Probe eine entsprechende Phasenkorrektur durchführen zu können. Dieses Prozedere wird für sämtliche interessierenden Modulationsfrequenzen durchgeführt, wodurch sich eine Kalibriertabelle ergibt, die in Zuordnung zu sämtlichen interessierenden Modulationsfrequenzen entsprechende Phasenwinkelkorrekturwerte aufweist.

Eine weitere Maßnahme, um Amplitudenschwankungen des Anregungslichts bei dem in Fig. 4 gezeigten Ausführungsbeispiel zu unterdrücken, besteht darin, statt der Amplitude des Meßsignals bzw. des vom Meßsignal abgeleiteten Signals das Verhältnis der Amplitude des Meßsignals zum Referenzsignal zu nehmen, um so Schwankungen der intensitätsmodulierten Anregungslichtquelle zu unterdrücken. Dazu dient die Gleichrichterdiode 346 in Fig. 4.

Nach der Kalibrierung wird zunächst eine Messung bei einer Modulationsfrequenz durchgeführt, um den Betrag von $A_E$ und $\cdot_E$ zu erhalten, wobei der entsprechende Phasenkorrekturwert bei der verwendeten Modulationsfrequenz berücksichtigt wird. Dann wird eine andere Modulationsfrequenz eingestellt, um bei dieser anderen Modulationsfrequenz wieder den Betrag von $A_E$ und $\varphi_E$ zu bestimmen, um für die beiden Unbekannten $A_F$ und $\varphi_F$ zwei Gleichungen zu erhalten. Diese Gleichungen werden dann in der Mikrosteuerung bzw. im PC ausgewertet, und die Ergebnisse werden ausgegeben.

Die erfindungsgemäße Vorrichtung liefert somit eine Messung der Fluoreszenz im Frequenzbereich, wobei Fremdlicht und Anregungslicht elektronisch unterdrückt werden, weshalb die optische Zelle auf maximale Ausnutzung des Fluoreszenzlichts ausgelegt werden kann. Weiterhin werden Amplituden- und Phaseninformationen getrennt voneinander erfaßt, wobei diese Erfassung vorzugsweise in einem leicht verarbeitbaren Zwischenfrequenzbereich stattfindet. Das Umsetzen in den Zwischenfrequenzbereich ist besonders dort vorteilhaft, wo hohe Modulationsfrequenzen im Megahertzbereich eingesetzt werden. Das in Fig. 4 gezeigte Ausführungsbeispiel liefert ferner eine Phasenmessung, die auf einer Zeitmessung basiert, wobei zusätzlich eine gemeinsame Zeitbasis zur Anregungslichtmodulation und Phasenmessung verwendet wird. Dieses Meßprinzip ist durch preisgünstige Elemente realisierbar.

Bei dem in Fig. 3 gezeigten Ausführungsbeispiel, bei dem das Meßsignal im Sinne einer IQ-Demodulation zur Verbesserung des Verhältnisses zwischen Anregungs- und Fluoreszenzlicht verarbeitet wird, sei darauf hingewiesen, daß diese Maßnahme im Empfänger, der Analog-Elektronik oder in der Auswertung zur phasenselektiven Trennung von Anregungs- und Fluoreszenzlicht verwendet werden kann.

Ein weiterer Aspekt, der der Miniaturisierung zugute kommt, ist die Tatsache, daß ein optisches Filter direkt auf die Empfängerphotodiode aufgebracht werden kann. Vorzugsweise ist auf der Filterschicht ferner eine immobilisierte Farbstoffschicht aufgebracht, um Analyte zu messen, die mit der Farbstoffschicht wechselwirken. Auf der Filterschicht kann ferner eine Rezeptorschicht aufgebracht sein, die je nach Analytkonzentration eine unterschiedlich große Fluoreszenzmarkerdichte aufweist.

## Patentansprüche

1. Vorrichtung zur Bestimmung einer Fluoreszenz (20) einer Probe (18), mit folgenden Merkmalen:

   einer Anregungslichtquelle (12) zum Erzeugen eines Anregungslichts (14), das eine Wellenlänge aufweist, die geeignet ist, um in der Probe (18) Fluoreszenzlicht (20) zu erzeugen, wobei das Anregungslicht (14) durch ein Modulationssignal mit einer Modulationsfrequenz ($f_0$) moduliert ist (24);

   einem optischen Empfänger (16), der angeordnet ist, um ein elektrisches Meßsignal (26) zu erzeugen, das einen Fluoreszenzanteil und einen Anregungsanteil aufweist, wobei die Frequenz des Meßsignals (26) der Modulationsfrequenz ($f_0$) entspricht; und

   einer elektronischen Signalverarbeitungseinrichtung (30) zum Verarbeiten des Meßsignals (26), um die Fluoreszenz der Probe (18) zu bestimmen, indem das Meßsignal (26) oder ein von dem Meßsignal abgeleitetes Signal einer IQ-Demodulation mit einem Referenzsignal (32), dessen Phasenbeziehung zu dem Modulationssignal oder einem von dem Modulationssignal abgeleiteten Signal im wesentlichen 90° beträgt, unterzogen wird, um einen Quadraturanteil des Meßsignals oder des von dem Meßsignal abgeleiteten Signals zu erhalten, in dem der Anregungsanteil im wesentlichen unterdrückt ist.

2. Vorrichtung nach Anspruch 1, die ferner folgendes Merkmal aufweist:
eine Reflektoreinrichtung (40), die derart bezüglich der Probe (18) und des optischen Empfängers (16) angeordnet ist, daß möglichst viel Fluoreszenzlicht (20) den optischen Empfänger (16) erreicht.

3. Vorrichtung nach Anspruch 1 oder 2, die ferner folgendes Merkmal aufweist:
ein optisches Filter (42), das zwischen dem optischen Empfänger (16) und der Probe (18) angeordnet ist, wobei das Filter (42) das Fluoreszenzlicht (20) durchläßt und das Anregungslicht (14) dämpft.

4. Vorrichtung nach Anspruch 3, bei der zwischen dem optischen Empfänger (16) und dem Filter (42) ferner eine Linse (44) angeordnet ist, um das durch das Filter (42) durchgelassene Licht auf den optischen Empfänger (16) zu bündeln.

5. Vorrichtung nach Anspruch 3, bei der der optische Empfänger (16) eine Photodiode ist, und das optische Filter (42) direkt auf der Photodiode aufgebracht ist.

6. Vorrichtung nach einem der Ansprüche 3 bis 5, bei der auf dem optischen Filter (42) eine immobilisierte Farbstoffschicht aufgebracht ist, um mit der Farbstoffschicht wechselwirkende Proben zu bestimmen.

7. Vorrichtung nach einem der Ansprüche 3 bis 5, bei der auf dem Empfänger eine Rezeptorschicht aufgebracht ist, die je nach Probenkonzentration eine unterschiedliche Fluoreszenzmarkerdichte aufweist.

8. Vorrichtung nach einem der vorhergehenden Ansprüche, die ferner folgendes Merkmal aufweist:
eine Einrichtung (34) zum Erzeugen des Referenzsignals (32), die mit der elektronischen Signalverarbeitungseinrichtung (30) gekoppelt ist, und die einen Referenzempfänger zum Empfangen des von der Anregungslichtquelle (12) erzeugten Anregungslichts (14) aufweist, derart, daß das Referenzsignal (32) die Modulationsfrequenz ($f_0$) und eine definierte Phasenbeziehung zu dem Modulationssignal aufweist.

9. Vorrichtung nach einem der Ansprüche 1 bis 7, bei der die Anregungslichtquelle (12) eine LED ist, die durch ein elektrisches Ansteuersignal moduliert wird, die ferner folgendes Merkmal aufweist:
eine Einrichtung (46), die wirksam ist, um das Ansteuersignal als Referenzsignal (32) zu der elektronischen Signalverarbeitungseinrichtung (30) zu übertragen.

10. Vorrichtung nach einem der vorhergehenden Ansprüche, bei der die elektronische Signalverarbeitungseinrichtung (30) zur Durchführung der IQ-Demodulation des Meßsignals ferner folgendes Merkmal aufweist:

eine Einrichtung (312) zum Mischen des Meßsignals (26) mit dem Referenzsignal (32), wobei das Referenzsignal (32) die Modulationsfrequenz und eine Phasenverschiebung von im wesentlichen 90° (310) zu dem Modulationssignal hat, um ein Mischsignal ($S_M$) zu erzeugen; und

ein Tiefpaßfilter (314) mit einer Grenzfrequenz, die kleiner als das zweifache der Modulationsfrequenz ($f_0$) ist, um ein tiefpaßgefiltertes Signal ($S_{TP}$) als Quadraturanteil zu erzeugen, das lediglich den Fluoreszenzanteil aufweist.

11. Vorrichtung nach Anspruch 10, bei der die elektronische Signalverarbeitungseinrichtung (30) ferner folgendes Merkmal aufweist:
eine Einrichtung zum Bestimmen einer Abklingzeit des Fluoreszenzlichts und einer Amplitude des Fluoreszenzlichts unter Verwendung zweier oder mehrerer tiefpaßgefilterter Signale $S_{TP}$, die bei zumindest einer oder mehreren unterschiedlichen Modulationsfrequenzen ermittelt worden sind.

12. Vorrichtung nach einem der Ansprüche 1 bis 9, die ferner folgende Merkmale aufweist:

einen Oszillator (324) zum Liefern des Modulationssignals;

eine Phasenregelschleifenschaltung (328) zum Erzeugen eines Lokaloszillatorsignals aus dem Modulationssignal, wobei sich die Frequenz ($f_1$) des Lokaloszillatorsignals (LO-Signals) von der Frequenz ($f_0$) des Modulationssignals unterscheidet;

einen Mischer (322) zum Mischen des Meßsignals (26) mit dem LO-Signal, um ein Zwischenfrequenz-Meßsignal (ZF-Meßsignal) als von dem Meßsignal abgeleitetes Signal zu erhalten; und

einen weiteren Mischer (320) zum Mischen des Referenzsignals (32) mit dem LO-Signal, um ein ZF-Referenzsignal als von dem Modulationssignal abgeleitetes Signal zu erhalten.

**13.** Vorrichtung nach Anspruch 12, die ferner folgendes Merkmal aufweist:
eine Einrichtung (334, 336, 338) zum Bestimmen der Phasendifferenz zwischen dem ZF-Meßsignal und dem ZF-Referenzsignal durch Messen der Zeit zwischen zwei entsprechenden Nulldurchgängen der beiden Signale.

**14.** Vorrichtung nach Anspruch 13, bei der die Einrichtung zum Bestimmen der Phasendifferenz folgende Merkmale aufweist:

einen ersten Schmitt-Trigger (334) für das ZF-Referenzsignal;

einen zweiten Schmitt-Trigger (336) für das ZF-Meßsignal;

einen Zähler (338) mit einem Start-Eingang, einem Stopp-Eingang und einem Takt-Eingang, wobei der Start-Eingang mit dem ersten Schmitt-Trigger (334) gekoppelt ist, der Stopp-Eingang mit dem zweiten Schmitt-Trigger (336) gekoppelt ist, und der Takt-Eingang mit dem Oszillator (324) gekoppelt ist.

**15.** Vorrichtung nach Anspruch 13 oder 14, die ferner folgende Merkmale aufweist:

einen Gleichrichter (348) für das ZF-Meßsignal;

eine Einrichtung (342) zum Durchführen der IQ-Demodulation auf numerische Weise des nach Betrag und Phase erfaßten ZF-Meßsignals, um den Quadraturanteil des ZF-Meßsignals und daraus die Intensität und die Abklingzeitkonstante des Fluoreszenzlichts zu bestimmen.

**16.** Vorrichtung nach Anspruch 15, bei der die Einrichtung (342, 356) zum Durchführen der numerischen IQ-Demodulation angeordnet ist

um Betrag und Phase des erfaßten ZF-Meßsignals ($A_E$) mit dem Sinus des Phasenwinkels ($\varphi_E$) zu multiplizieren, um den Quadraturanteil ($Q_E$) des ZF-Meßsignals ($A_E$) zu erhalten;

um einen Phasenwinkel ($\varphi_F$) und einen Betrag des Fluoreszenzanteils ($A_F$) unter Verwendung des Quadraturanteils ($Q_E$) und eines vorher ermittelten Anregunsanteils ($A_A$) zu berechnen; und

die Fluoreszenzintensität ($A_{F0}$) und die Abklingzeitkonstante ($\tau$) unter Verwendung des Phasenwinkels ($\varphi_F$) und des Betrags des Fluoreszenzanteils ($A_F$) zu berechnen.

**17.** Verfahren nach Anspruch 15, bei dem die Einrichtung (342, 356) zum Durchführen der numerischen IQ-Demodulation angeordnet ist,

um ein nach Betrag und Phase bei einer ersten Modulationsfrequenz erfaßtes Meßsignal mit dem Sinus des Phasenwinkels ($\varphi_E$) zu multiplizieren, um den Quadraturanteil ($Q_{E,F}$) des ZF-Meßsignals für die erste Modulationsfrequenz zu erhalten;

um ein nach Betrag und Phase bei einer zweiten Modulationsfrequenz erfaßtes Meßsignal mit dem Sinus des Phasenwinkels zu multiplizieren, um den Quadraturanteil des ZF-Meßsignals für die zweite Modulationsfrequenz zu erhalten; und

aus den zwei Quadraturanteilen für die zwei unterschiedlichen Modulationsfrequenzen sowohl die Intensität ($A_{F0}$) als auch die Abklingzeitkonstante ($\tau$) der Fluoreszenz zu bestimmen.

**18.** Vorrichtung nach Anspruch 17, die angeordnet ist, um für eine Mehrzahl von Frequenzpaaren eine Mehrzahl von Einzel-Intensitäten und Einzel-Abklingzeitkonstanten der Fluoreszenz zu bestimmen; und
bei der die Einrichtung (342, 356) zum Durchführen der numerischen IQ-Demodulation angeordnet ist, um die Mehrzahl von Einzel-Intensitäten und Einzel-Abklingzeitkonstanten zu kombinieren, um die Intensität und Abklingzeitkonstante der Fluoreszenz zu bestimmen.

19. Vorrichtung nach einem der vorhergehenden Ansprüche, die ferner folgendes Merkmal aufweist:

eine Phasenkorrektureinrichtung, um eine Phasenkorrektur des Meßsignals oder des von dem Meßsignal abgeleiteten Signals und/oder des Referenzsignals durchzuführen, wobei für jede Modulationsfrequenz in einem Bereich von Modulationsfrequenzen die Beträge der Korrekturphasenwinkel für die Modulationsfrequenzen derart eingestellt sind, daß der Quadraturanteil des Meßsignals oder des von dem Meßsignal abgeleiteten Signals für eine nicht-fluoreszierende Probe bei den Modulationsfrequenzen gleich Null ist.

20. Vorrichtung nach einem der vorhergehenden Ansprüche, bei der die elektronische Signalverarbeitungseinrichtung (30) ferner folgendes Merkmal aufweist:

eine Einrichtung (302, 304) zum Unterdrücken von Fremdlicht durch für die Modulationsfrequenz frequenzselektives Verstärken des Meßsignals (26).

21. Vorrichtung nach Anspruch 20, bei der die Einrichtung zum Unterdrücken von Fremdlicht (22) ferner eine Einrichtung (306, 308) zum für die Modulationsfrequenz ($f_0$) frequenzselektiven Verstärken des Referenzsignals (32) aufweist.

22. Verfahren zur Bestimmung einer Fluoreszenz (20) einer Probe (18), mit folgenden Schritten:

Erzeugen eines Anregungslichts (14), das eine Wellenlänge aufweist, die geeignet ist, um in der Probe (18) Fluoreszenzlicht (20) zu erzeugen, wobei das Anregungslicht durch ein Modulationssignal mit einer Modulationsfrequenz ($f_0$) moduliert ist;

Erzeugen eines elektrischen Meßsignals (26), das einen Fluoreszenzanteil und einen Anregungsanteil aufweist, wobei die Frequenz des Meßsignals der Modulationsfrequenz ($f_0$) entspricht; und

Verarbeiten des Meßsignals (26), um die Fluoreszenz zu bestimmen, durch IQ-Demodulieren des Meßsignals (26) mit einem Referenzsignal (32), dessen Phasenbeziehung zu dem Modulationssignal im wesentlichen 90° beträgt, um einen Quadraturanteil des Meßsignals zu erhalten, in dem der Anregungsanteil unterdrückt ist.

10

18    20    22

24

14    16

12

| Modulator | → | optische Quelle |

optischer Empfänger

Referenz    Messung

32    26

30    elektronische Signalverarbeitungseinrichtung    Floureszenz-daten

Fig. 1

10

34  12  14  36  38  40  42  44  16

14

18

Fig. 2

EP 0 997 728 A2

Fig. 3

Fig. 4

Fig. 5

Fig. 6